# EUROPÄISCHE PATENTSCHRIFT

(11) **EP 2 825 442 B1**
(45) Veröffentlichungstag und Bekanntmachung des Hinweises auf die Patenterteilung: **27.09.2017**
(21) Anmeldenummer: 13708151.9
(22) Anmeldetag: 07.03.2013
(51) Int. Cl.: B62K 15/00

(54) **FALTRAD**
FOLDING BICYCLE
BICYCLETTE PLIANTE

(30) Priorität: 13.03.2012 DE 102012203859
(43) Veröffentlichungstag der Anmeldung: 21.01.2015
(73) Patentinhaber: H. Young (Operations) Limited, RG14 1BD (GB)
(72) Erfinder: HARTMANN, Markus, 87665 Mauerstetten (DE)
(74) Vertreter: Lau, Sarah Jane
(86) Internationale Anmeldenummer: PCT/EP2013/054623
(87) Internationale Veröffentlichungsnummer: WO 2013/135560

(56) Entgegenhaltungen:
- WO-A1-2004/024546
- WO-A1-2011/161657
- US-A1- 2010 212 978
- US-A1- 2010 230 927

## Beschreibung

Die vorliegende Erfindung betrifft ein Faltrad.

Herkömmliche Falträder weisen eine Fahr- und eine Transportstellung auf. In der Fahrstellung des Faltrads kann eine Benutzerperson mit dem Faltrad fahren. In der Transportstellung des Faltrads ist dieses zusammengefaltet und kann platzsparend verstaut werden.

Falträder sind für unterschiedliche Einsatzzwecke optimiert. Zum Beispiel gibt es solche Falträder, welche speziell als Mobilitätsergänzung zum Automobil konzipiert sind. Solche Falträder weisen regelmäßig einen Aktionsradius von 5-10 km auf, welcher ülblichen "Park & Ride" - Strecken entspricht. Außerdem weisen solche Falträder ein verhältnismäßig kleines Packmaß auf, so dass sie sich in einem Kofferraum eines Kleinwagens unterbringen lassen.

US 2010/0230927 A1 beschreibt ein Faltrad, das einen Rahmen, eine Lenkeinheit, ein mit einem ersten Ende des Rahmens und der Lenkeinheit gekoppeltes Achsenrohr, eine mit der Lenkeinheit durch das Achsenrohr verbundene Vorderradgabel, ein auf die Vorderradgabel montiertes Vorderrad, eine mit einem zweiten Ende des Rahmens gekoppelte Hinterradgabel, ein auf die Hinterradhabel montiertes Hinterrad und eine auf dem Rahmen installierte Sitzeinheit umfasst. An einer zentralen Position des Rahmens ist eine Klappeinheit installiert und die ersten und zweiten Enden des Rahmens umfassen jeweils eine erste Schwenkstellung und eine zweite Schwenkstellung, sodass, wenn der Rahmen mittels der Klappeinheit geklappt wird, die erste und zweite Schwenkstellung ineinander gestapelt sind, um die Wirkung der Reduzierung des Klappvolumens des Fahrrads zu erreichen.

US 2010/0212978 A1 beschreibt ein Faltrad, das im Hinterrad ein Planetenzahnradsatz sowie Tretkurbeln umfasst, die mit dem Planetenzahnradsatz verbunden sind, um das Fahrrad anzutreiben. Im Vorderrad ist ein Motor angeordnet,
um das Vorderrad anzutreiben, sodass das Fahrrad auf zwei verschiedene Arten und Weisen betrieben werden kann. Die Vorder- und Hinterräder weisen jeweils Magneten auf, die mit Induktionsgliedern zusammenarbeiten, sodass, wenn die Räder rotieren, die Änderung des Magnetfeldes Antriebskraft für den Motor erzeugt. Das obere Rohr des Fahrrads umfasst mehrere Gelenke, die es ermöglichen, dass das Fahrrad auf eine kompakte Größe zusammenklappt werden kann.

Eine Aufgabe der vorliegenden Erfindung besteht darin, ein verbessertes Faltrad bereitzustellen. Dieses soil ein möglichst geringes Packmaß bei gleichzeitig guten Fahreigenschaften gewährleisten.

Diese Aufgabe wird durch ein Faltrad mit den Merkmalen des Patentanspruchs 1 gelöst.

Demgemäß wird ein Faltrad mit einem Rahmen, einem Vorderrad und einem Hinterrad bereitgestellt. Der Rahmen erstreckt sich in einer Haupterstreckungsebene. Das Vorderrad ist um eine erste, sich senkrecht zur Haupterstreckungsebene erstreckende Achse verschwenkbar. Das Hinterrad ist um eine zweite, sich senkrecht zur Haupterstreckungsebene erstreckende Achse verschwenkbar. Der Rahmen weist ein Gelenk derart auf, dass das Vorder- und Hinterrad um eine dritte, sich senkrecht zur Fahrbahn erstreckende Achse zueinander schwenkbar sind. Für ein Verstellen des Faltrads zwischen einer Fahrstellung und einer Transportstellung sind das Vorderrad um die erste Achse und das Hinterrad um die zweite Achse gleichsinnig verschwenkbar.

Dadurch werden das Vorder- und Hinterrad günstig zueinander im Hinblick auf ein kleines Packmaß positioniert. Außerdem bietet das gleichsinnige Verschwenken ergonomische Vorteile. Dadurch lässt sich ein nicht nur kleines, sondern auch geometrisch günstiges Packmaß erzielen. Dies ermöglicht es, das Faltrad in dessen Transportstellung längsgestellt in einem Kofferraum eines Kleinfahrzeugs unterzubringen. Das heißt, das Faltrad füllt den von der Rückbank einerseits und einer senkrechten, die Kofferraumöffnung definierenden Innenwand andererseits begrenzten Raum aus. Ein solches Längsstellen des Faltrads bringt eine Reihe von Vorteilen mit sich. Beispielsweise muss das Faltrad nicht erst gedreht werden, um im Kofferraum untergebracht zu werden. Weiterhin verliert man kaum Stauraum, da das Faltrad mehr oder weniger passend zwischen der Rücksitzbank und der Innenwand angeordnet ist. Weiterhin steht ein längsgestelltes Faltrad relativ stabil und kann gut gesichert werden. Bei Beschleunigungsvorgängen stürzt ein längsgestelltes Faltrad selten um, so dass Beschädigungen anderer Transportgegenstände im Kofferraum oder Beschädigungen am Automobil selbst vermieden werden können. Außerdem können in Querrichtung des Automobils so mehrere längsgestellte Falträder nebeneinander positioniert werden.

Weiterhin lässt sich das Faltrad aufgrund seines kleinen und geometrisch günstigen Packmaßes in einer Ersatzradmulde - anstelle im Kofferraum selbst - eines Automobils selbst unterbringen. Die Ersatzradmulde wird bei vielen Automobilen nicht mehr verwendet, da diese anstelle des Ersatzrads ein Pannenset mit sich führen. Wird das Faltrad in der Ersatzradmulde untergebracht, geht kein Stauraum im Kofferraum verloren.

Soweit vorliegend von senkrecht oder parallel gesprochen wird, so sind hiervon auch Abweichungen von der Senkrechten oder Parallelen von 0 bis 45°, bevorzugt 0 bis 30°, weiter bevorzugt 0 bis 20°, noch weiter bevorzugt 0 bis 10°, noch weiter bevorzugt 0 bis 5° und noch weiter bevorzugt 0 bis 3° umfasst.

Aus den Unteransprüchen ergeben sich vorteilhafte Ausführungsformen der Erfindung.

Gemäß einer Ausführungsform weist der Rahmen ein Lenkkopflager, mittels welchem das Vorderrad für ein Lenken desselben drehbar gelagert ist, und ein Sattelstützenlager auf, welches eine Sattelstütze trägt, wobei das Gelenk in Fahrtrichtung mittig zwischen dem Lenkkopflager und dem Sattelstützenlager angeordnet ist. In einer gefalteten Transportstellung des Faltrads kommt somit das Lenkkopflager in der Nähe des Sattelstützenlagers zum Liegen. "Mittig" umfasst vorliegend auch Abweichungen von genau mittig von 0 bis 20 cm, bevorzugt 0 bis 10 cm, weiter bevorzugt 0 bis 5 cm, noch weiter bevorzugt 0 bis 3 cm, wobei von einer jeweiligen Mittelachse des Lenkkopflagers und des Sattelstützenlagers gemessen wird.

Gemäß einer weiteren Ausführungsform ist das Faltrad zwischen einer Fahrstellung und einer Transportstellung verstellbar, wobei das Lenkkopflager und das Sattelstützenlager in der Transportstellung nebeneinander angeordnet sind. "Nebeneinander" meint, dass der Abstand zwischen dem Lenkkopflager und dem Sattelstützenlager in der Transportstellung weniger als 20 cm, bevorzugt weniger als 10 cm, noch weiter bevorzugt weniger als 5 cm und noch weiter bevorzugt weniger als 3 cm beträgt, wobei von einer jeweiligen Mittelachse des Lenkkopflagers und des Sattelstützenlagers gemessen wird.

Gemäß einer weiteren Ausführungsform ist das Vorderrad für ein Verstellen des Faltrads zwischen einer Fahrstellung und einer Transportstellung desselben in Fahrtrichtung verschwenkbar. Dadurch gelangt das Vorderrad in eine im Hinblick auf ein kleines Packmaß vorteilhafte Stellung.

Gemäß einer weiteren Ausführungsform ist das Hinterrad für ein Verstellen des Faltrads zwischen einer Fahrstellung und einer Transportstellung desselben in Fahrtrichtung verschwenkbar. Hierdurch wird eine im Hinblick auf ein kleines Packmaß günstige Stellung des Hinterrads erzielt.

Gemäß einer weiteren Ausführungsform ist das Faltrad zwischen einer Fahrstellung und einer Transportstellung verstellbar, wobei zumindest in der Fahrstellung eine Drehachse des Vorderrads hinter der ersten Achse liegt. Dadurch führt ein Anheben des Faltradvorderbaus zu einem Verschwenken aufgrund der wirkenden Schwerkraft des Vorderrads in Fahrtrichtung um die erste Achse. Dies ist ergonomisch günstig.

Gemäß einer weiteren Ausführungsform weist das Faltrad eine Lenkerstrebe und eine Vorderradschwinge auf. Die Vorderradschwinge ist an ihrem einen Ende an der Lenkerstrebe schwenkbar gelagert. An ihrem anderen Ende trägt die Vorderradschwinge das Vorderrad drehbar gelagert. Für ein Verstellen des Faltrads zwischen einer Fahrstellung und einer Transportstellung desselben ist die Vorderradschwinge zwischen einer ersten Schwenkstellung und einer zweiten Schwenkstellung verstellbar. In der ersten Schwenkstellung ist die Drehachse des Vorderrads auf einer Seite der Lenkerstrebe angeordnet. In der zweiten Schwenkstellung ist die Drehachse des Vorderrads auf der anderen Seite der Lenkerstrebe angeordnet. Dadurch wird eine im Hinblick auf ein kleines Packmaß günstige Stellung des Vorderrads (zweite Schwenkstellung) erzielt. Soweit vorliegend von "Strebe", beispielsweise Lenkerstrebe, gesprochen wird, sind hiervon sämtliche Querschnitte, beispielsweise Hohlprofile oder Querschnitte aus Vollmaterial, umfasst. Charakterisierend für die Streben ist vorliegend, dass sie einen in Längsrichtung mehr oder weniger konstanten Querschnitt aufweisen. Die Längsrichtung muss dabei nicht einer geraden Linie folgen, sondern kann auch gekrümmt sein.

Gemäß einer weiteren Ausführungsform weist das Faltrad eine Feststelleinrichtung zum Feststellen der Vorderradschwinge in der ersten und/oder zweiten Schwenkstellung auf. Dadurch wird ein selbsttätiges Verstellen des Vorderrads zwischen der ersten und zweiten Schwenkstellung verhindert, was zu einem einfacheren Handling des Faltrads führt.

Gemäß einer weiteren Ausführungsform weist die Feststelleinrichtung eine Verriegelungsstellung und eine Freigabestellung auf. In der Verriegelungsstellung ist ein Verschwenken des Vorderrads zwischen der ersten und zweiten Schwenkstellung gesperrt. In der Freigabestellung ist das Verschwenken des Vorderrads zwischen der ersten und zweiten Schwenkstellung freigegeben. Weiterhin weist das Faltrad einen Seilzug auf, mittels welchem die Feststelleinrichtung zwischen der Verriegelungsstellung und der Freigabestellung verstellbar ist. Der Seilzug, auch als Bowdenzug bezeichnet, ermöglicht eine ergonomisch günstige Betätigung der Feststelleinrichtung durch eine Benutzerperson.

Gemäß einer weiteren Ausführungsform weist der Seilzug einen an einer Lenkerstange des Faltrads angeordneten Hebel zum Verstellen der Feststelleinrichtung zwischen der Verriegelungsstellung und der Freigabestellung auf. Ein solcher Hebel lässt sich ergonomisch besonders einfach betätigen.

Gemäß einer weiteren Ausführungsform weist die Verstelleinrichtung eine an der Vorderradschwinge befestigte Rastscheibe und ein in oder an der Lenkerstrebe linear geführtes, mittels des Seilzugs verstellbares Verriegelungselement auf. Das Verriegelungselement steht in der Verriegelungsstellung der Feststelleinrichtung mit einer Rast der Rastscheibe im Eingriff. In der Freigabestellung der Verriegelungseinrichtung steht das Verriegelungselement außer Eingriff mit der Rast. Dadurch ergibt sich ein einfach herzustellender Mechanismus. Weiterhin kann die Rastscheibe auch mehrere Rasten, beispielsweise eine erste und eine zweite Rast aufweisen. Die erste Rast ist der ersten Schwenkstellung des Vorderrads, und die zweite Rast ist der zweiten Schwenkstellung des Vorderrads zugeordnet. Die Rastscheibe kann sich aus zwei aneinander gesetzten Kreissegmenten zusammensetzen, wobei das eine Kreissegment einen größeren Radius als das andere Kreissegment aufweist. Dadurch ergeben sich zwei Stufen, welche die erste und zweite Rast ausbilden.

Gemäß einer weiteren Ausführungsform ist das Verriegelungselement mittels eines Bajonettverschlusses in der Lenkerstrebe gegen ein Herausfallen gesichert. Die Rastscheibe verhindert ein Verdrehen des Verriegelungselements zum Lösen des Bajonettverschlusses. Dadurch ergibt sich eine einfache Montage des Verriegelungselements.

Gemäß einer weiteren Ausführungsform ist das Faltrad zwischen einer Fahrstellung und einer Transportstellung verstellbar und weist eine Lenkerstrebe und eine Vorderradschwinge auf. Die Vorderradschwinge ist an ihrem einen Ende an der Lenkerstrebe schwenkbar gelagert. An ihrem anderen Ende trägt die Vorderradschwinge das Vorderrad drehbar gelagert. Die Lenkerstrebe ist in der Haupterstreckungsebene gekröpft ausgebildet, um in der Transportstellung des Faltrads ein Pedal und/oder eine Tretlageraufnahme des Faltrads auszusparen. Dadurch kann das Lenkkopflager eng an das Sattelstützenlager herangefaltet werden, ohne dass es zu einer Kollision der Lenkerstrebe mit den Pedalen oder der Tretlageraufnahme kommt.

Gemäß einer weiteren Ausführungsform weist das Faltrad eine Lenkerstrebe, eine Vorderradschwinge und eine Feder auf. Die Vorderradschwinge ist an ihrem einen Ende an der Lenkerstrebe schwenkbar gelagert. An ihrem anderen Ende trägt die Vorderradschwinge das Vorderrad drehbar gelagert. Mittels der Feder stützt sich die Vorderradschwinge an der Lenkerstrebe ab. Somit ist das Faltrad mit einer Vorderradfederung ausgestattet, welche den Fahrkomfort erhöht. Gerade bei einer Verwendung von Hochdruckreifen für das Vorder- und Hinterrad, wirkt sich diese besonders den Fahrkomfort steigernd aus. Hochdruckreifen verringern vorteilhaft den Rollwiderstand des Faltrads.

Gemäß einer weiteren Ausführungsform weist das Faltrad ein Lenkkopflager auf, welches die Lenkerstrebe gegenüber dem Rahmen drehbar gelagert hält, wobei die Feder zumindest teilweise innerhalb der Lenkerstrebe und/oder des Lenkkopflagers angeordnet ist. Dadurch wird die Feder besonders platzsparend untergebracht.

Gemäß einer weiteren Ausführungsform weist das Faltrad eine Druckstrebe auf, welche sich einerseits an der Vorderradschwinge und andererseits an der Feder abstützt. Dadurch wird eine Kraftübertragung von der Vorderradschwinge auf die Feder einfach gewährleistet. Bevorzugt trägt die Druckstrebe eine Bremse, insbesondere eine Cantilever-Bremse, zum Bremsen des Vorderrads. Eine solche Bremse federt dann zusammen mit dem Vorderrad ein.

Gemäß einer weiteren Ausführungsform ist ein Kopplungsteil vorgesehen, welches einerseits gegen die Feder wirkt und andererseits eine Einführschräge zur Aufnahme der Druckstrebe aufweist. Dadurch kann die Druckstrebe einfach in Wirkverbindung mit der Feder gebracht werden.

Gemäß einer weiteren Ausführungsform weist das Faltrad ein Ausgleichselement, insbesondere ein Elastomer, auf. Das Ausgleichselement verbindet die Druckstrebe mit der Vorderradschwinge und lässt ein Verschwenken der Druckstrebe gegenüber der Vorderradschwinge zu. Dadurch wird eine Winkeländerung zwischen Druckstrebe und Vorderradschwinge beim Einfedern des Vorderrads ermöglicht.

Gemäß einer weiteren Ausführungsform weist das Faltrad ein Lenkkopflager auf, mittels welchem das Vorderrad für ein Lenken des Faltrads um eine vierte Achse drehbar gelagert ist. Für das Verstellen des Faltrads zwischen einer Fahrstellung und einer Transportstellung desselben ist das Vorderrad um die dritte und vierte Achse gegensinnig verschwenkbar. Dadurch lässt sich ein besonders günstiges Packmaß erzielen.

Es kann vorgesehen sein, dass das Vorderrad für ein Verstellen des Faltrads zwischen einer Fahrstellung und einer Transportstellung desselben in einem ersten Schritt in Fahrtrichtung um die erste Achse verschwenkbar ist. Dabei kann das Vorderrad unter der ersten Achse hindurch verschwenkbar vorgesehen sein. Weiter kann vorgesehen sein, dass das Faltrad ein Lenkkopflager aufweist, mittels welchem das Vorderrad für ein Lenken des Faltrads um eine vierte Achse drehbar gelagert ist, und dass das Vorderrad für das Verstellen des Faltrads zwischen der Fahrstellung und der Transportstellung desselben in einem zweiten Schritt um die dritte und vierte Achse gegensinnig verschwenkbar ist.

Es kann vorgesehen sein, dass das Hinterrad für ein Verstellen des Faltrads zwischen einer Fahrstellung und einer Transportstellung desselben in einem ersten Schritt in Fahrtrichtung um die zweite Achse verschwenkbar. Dabei kann das Hinterrad unter der zweiten Achse hindurch verschwenkbar vorgesehen sein. Es kann vorgesehen sein, dass das Vorderrad für ein Verstellen des Faltrads zwischen der Fahrstellung und der Transportstellung desselben in einem zweiten Schritt in Fahrtrichtung um die erste Achse verschwenkbar. Dabei kann das Vorderrad unter der ersten Achse hindurch verschwenkbar vorgesehen sein. Weiter kann vorgesehen sein, dass das Faltrad ein Lenkkopflager aufweist, mittels welchem das Vorderrad für ein Lenken des Faltrads um eine vierte Achse drehbar gelagert ist, und dass das Vorderrad für das Verstellen des Faltrads zwischen der Fahrstellung und der Transportstellung desselben in einem dritten Schritt um die dritte und vierte Achse gegensinnig verschwenkbar ist.

Weiterhin wird ein Verfahren zum Verstellen des erfindungsgemäßen Faltrads zwischen einer Fahrstellung und einer Transportstellung desselben bereitgestellt. Dabei wird das Vorderrad um die erste Achse, das Hinterrad um die zweite Achse und das Vorder- und/oder Hinterrad um die dritte Achse verschwenkt.

Es kann vorgesehen sein, dass das Vorderrad für ein Verstellen des Faltrads zwischen einer Fahrstellung und einer Transportstellung desselben in einem ersten Schritt in Fahrtrichtung um die erste Achse verschwenkt wird. Dabei kann das Vorderrad unter der ersten Achse hindurch verschwenkt werden. Weiter kann vorgesehen sein, dass das Faltrad ein Lenkkopflager aufweist, mittels welchem das Vorderrad für ein Lenken des Faltrads um eine vierte Achse drehbar gelagert ist, und dass das Vorderrad für das Verstellen des Faltrads zwischen der Fahrstellung und der Transportstellung desselben in einem zweiten Schritt um die dritte und vierte Achse gegensinnig verschwenkt wird.

Es kann vorgesehen sein, dass das Hinterrad für ein Verstellen des Faltrads zwischen einer Fahrstellung und einer Transportstellung desselben in einem ersten Schritt in Fahrtrichtung um die zweite Achse verschwenkt wird. Dabei kann das Hinterrad unter der zweiten Achse hindurch verschwenkt werden. Es kann vorgesehen sein, dass das Vorderrad für ein Verstellen des Faltrads zwischen der Fahrstellung und der Transportstellung desselben in einem zweiten Schritt in Fahrtrichtung um die erste Achse verschwenkt wird. Dabei kann das Vorderrad unter der ersten Achse hindurch verschwenkt werden. Weiter kann vorgesehen sein, dass das Faltrad ein Lenkkopflager aufweist, mittels welchem das Vorderrad für ein Lenken des Faltrads um eine vierte Achse drehbar gelagert ist, und dass das Vorderrad für das Verstellen des Faltrads zwischen der Fahrstellung und der Transportstellung desselben in einem dritten Schritt um die dritte und vierte Achse gegensinnig verschwenkt wird.

Soweit vorliegend von "erster", "zweiter" oder "dritter" Schritt gesprochen wird, könnte genauso formuliert werden: "zunächst", "in einem weiteren Schritt" oder "in einem noch weiteren Schritt".

Die Erfindung wird nachfolgend anhand von Ausführungsformen unter Bezugnahme auf die beiliegenden Figuren der Zeichnung näher erläutert.

Es zeigen dabei:
- Figuren 1A und 1B: Seitenansichten eines Faltrads gemäß einer Ausführungsform in einer Fahrstellung;
- Figuren 2A und 2B: in perspektivischen Ansichten das Faltrad aus den Figuren 1A und 1B;
- Figuren 3A und 3B: die Ansichten aus Figuren 2A und 2B mit verschwenktem Hinterrad;
- Figuren 4A und 4B: die Ansichten aus Figuren 3A und 3B mit verschwenktem Vorderrad;
- Figuren 5A und 5B: die Ansichten aus den Figuren 4A und 4B mit gefalteter oberer Rahmenstrebe;
- Figuren 6A und 6B: die Ansichten aus den Figuren 5A und 5B mit gefalteter Lenkerstrebe;
- Figuren 7A und 7B: die Ansichten aus den Figuren 6A und 6B mit eingeschobener Sattelstütze;
- Figuren 8A bis 8D: verschiedene Parallelprojektionen isometrische Ansichten des Faltrads aus den Figuren 7A und 7B;
- Figur 9: in einer Explosionsdarstellung eine Feststelleinrichtung des Faltrads gemäß den Figuren 1A und 1B;
- Figuren 10A bis 10C: verschiedene Zustände beim Einsetzen eines Verriegelungselements der Feststelleinrichtung aus Figur 9;
- Figuren 11A bis 11D: in perspektivischer Ansicht und teilweise ausgebrochen den Faltradvorderbau in verschiedenen Zuständen der Feststelleinrichtung aus Figur 9;
- Figuren 12A und 12B: in perspektivischer Ansicht das Faltrad gemäß den Figuren 1A und 1B, wobei eine Druckstrebe mittels eines Kopplungsstücks mit einer nicht gezeigten Feder gekoppelt wird;
- Figuren 13A und 13B: näherungsweise einen Schnitt XIII-XIII aus Figur 12A bzw. Figur 12B;
- Figur 14: die Ansicht aus Figur 13B im eingefederten Zustand;
- Figuren 15A und 15B: in einer vergrößerten Seitenansicht aus Figur 12A eine Vorderradschwinge samt Druckstrebe sowie weiterer Komponenten im nicht-eingefederten und eingefederten Zustand; und
- Figur 16: in einer Explosionsdarstellung die Vorderradschwinge, Druckstrebe sowie weitere Komponenten aus Figur 15A.

In den Figuren bezeichnen gleiche Bezugszeichen gleiche oder funktionsgleiche Komponenten, soweit nichts Gegenteiliges angegeben ist.

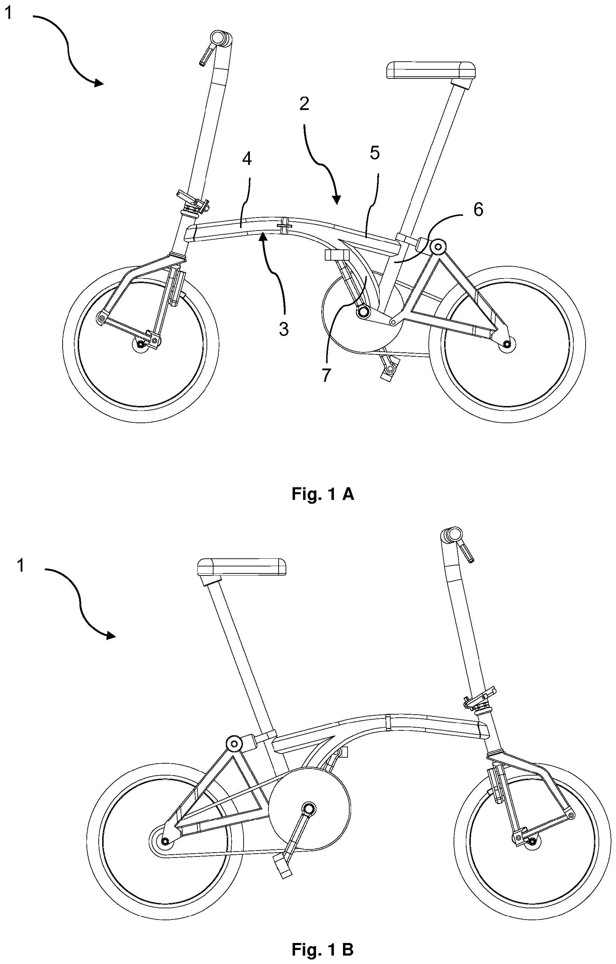

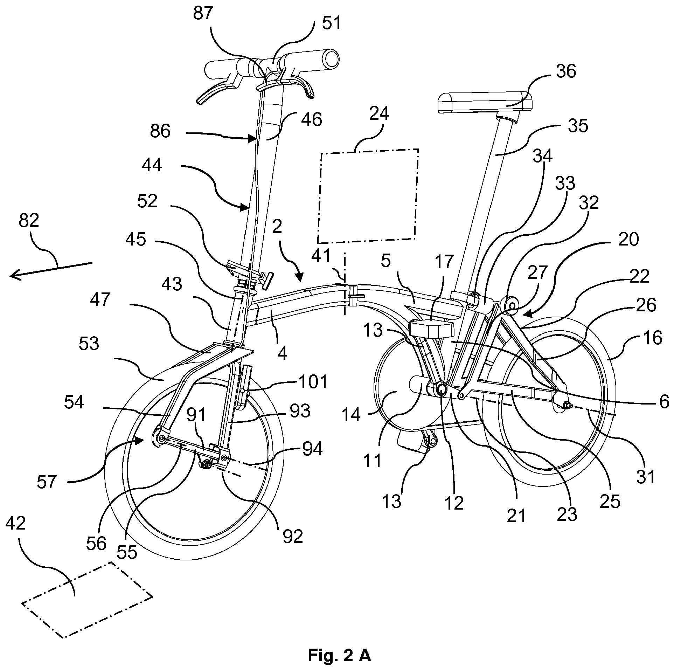

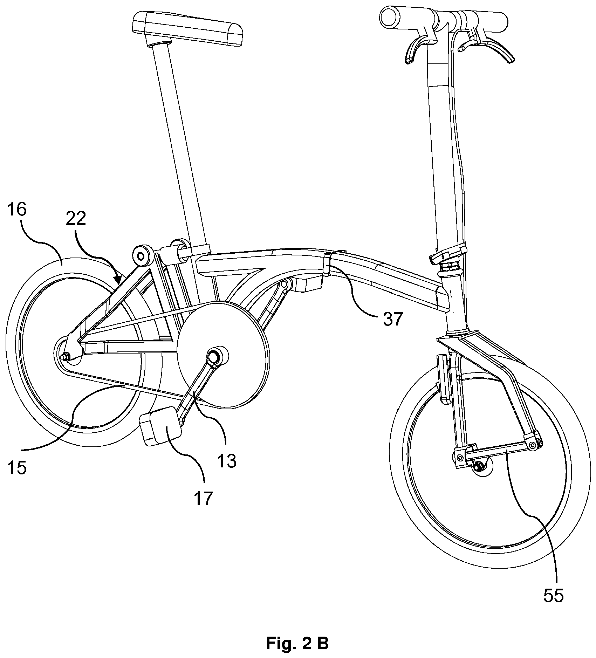

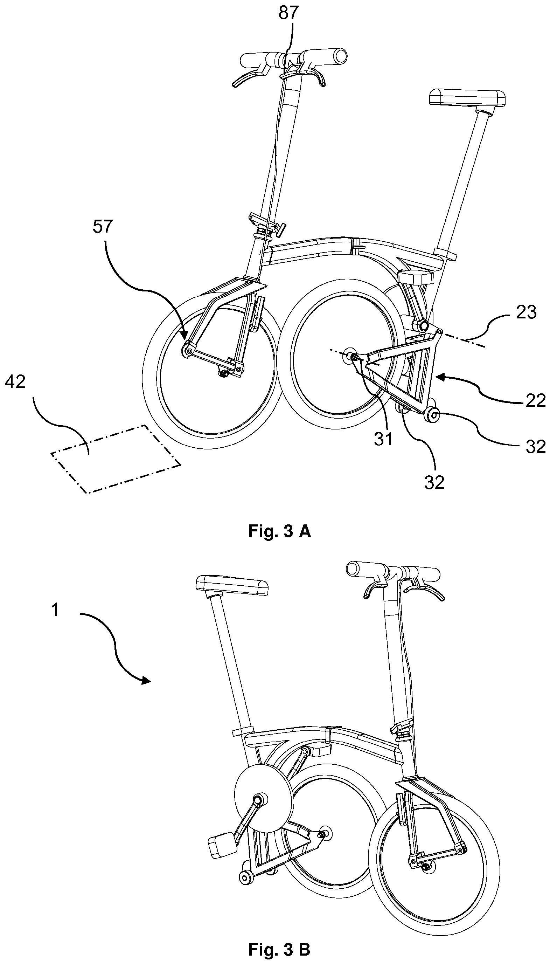

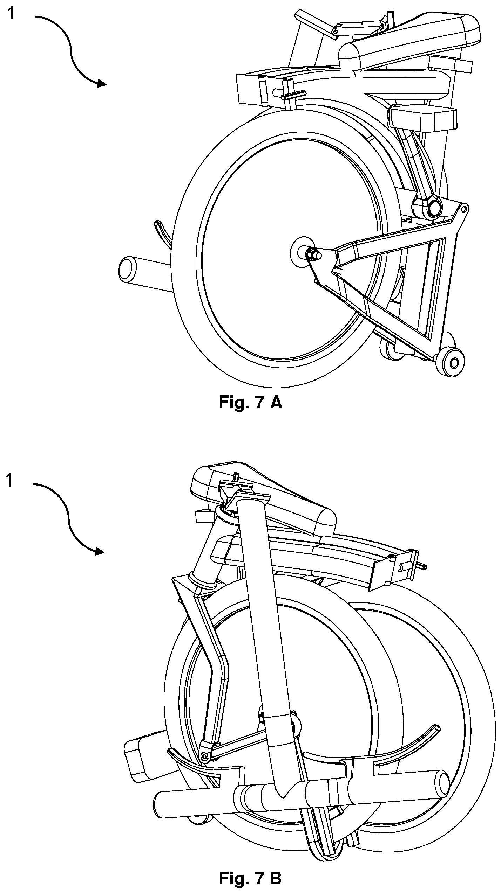

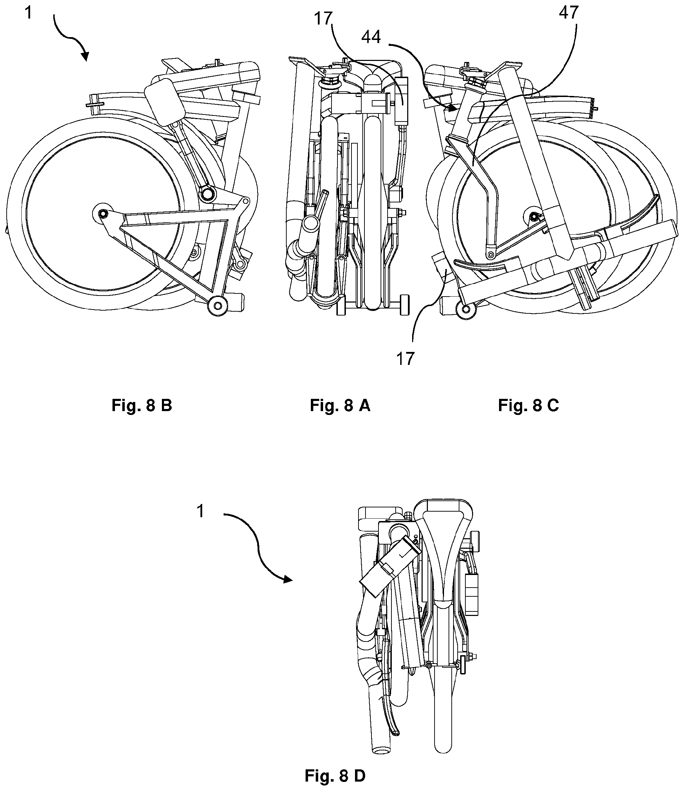

Die Figuren 1A und 1B zeigen jeweils eine Seitenansicht eines Faltrads 1 gemäß einer Ausführungsform. Die Figuren 2A und 2B zeigen das Faltrad 1 aus den Figuren 1A und 1B in perspektivischen Ansichten. Das Faltrad 1 gemäß den Figuren 1A bis 2B befindet sich in einer Fahrstellung. In der Fahrstellung kann das Faltrad 1 von einem Benutzer bestiegen und gefahren werden. Die Figuren 3A bis 6B zeigen perspektivische Ansichten verschiedener Zwischenstellungen des Faltrads 1 beim Zusammenfalten desselben ausgehend von der Fahrstellung hin zu einer in den Figuren 7A bis 8D gezeigten Transportstellung. Die Figuren 7A und 7B zeigen dabei das Faltrad 1 in der Transportstellung perspektivisch, während die Figuren 8A bis 8D das Faltrad 1 in der Transportstellung in verschiedenen Parallelprojektionen darstellen.

Nun zurückkehrend zu Figur 1A ist dort gezeigt, dass das Faltrad 1 einen Rahmen 2 umfasst. Der Rahmen 2 setzt sich beispielsweise aus einer oberen Rahmenstrebe 3 zusammen, welche einen ersten Abschnitt 4 und einen zweiten Abschnitt 5 umfasst. Der Abschnitt 5 der oberen Rahmenstrebe 3 kann mit einem Sattelstützenlager 6 und einer unteren Rahmenstrebe 7 einen Dreiecksrahmen definieren. Das Sattelstützenlager 6 und die untere Rahmenstrebe 7 laufen in einer Ecke des Dreiecksrahmens zusammen, welche eine Aufnahme 11 für ein Tretlager (nicht dargestellt) aufweist. In dem Tretlager ist eine Welle 12 gelagert, siehe Figur 2A. Die Welle 12 ist mit Kurbeln 13 sowie einem Kettenblatt 14 verbunden. Das Kettenblatt 14 treibt über eine Kette 15 ein Hinterrad 16 des Faltrads 1 an, siehe Fig. 2B. An den Enden der Kurbeln 13 sind jeweils Pedale 17 angeordnet. Allerdings sind auch andere Ausgestaltungen des Antriebs, das heißt der Welle 12, der Kurbel 13, des Kettenblatts 14, der Kette 15 und der Pedale 17 denkbar.

An der Aufnahme 11 sind zwei Arme 21 (der zweite Arm 21 ist in keiner der Figuren zu sehen) fest angebracht, siehe Fig. 2A. An den Armen 21 ist eine Doppelschwinge 20 um eine Achse 23 schwenkbar gelagert angebracht. Die Achse 23 erstreckt sich senkrecht zu einer Haupterstreckungsebene 24 des Rahmens 2. Die Lage der Haupterstreckungsebene 24 wird dabei durch die Lage des erwähnten Dreiecksrahmens definiert.

Die Doppelschwinge 20 umfasst zwei über nicht näher bezeichnete Querstreben miteinander verbundene Hinterradschwingen 22, welche das Hinterrad 16 zwischen sich aufnehmen. Jede der Hinterradschwingen 22 kann sich aus einem ersten Abschnitt 25, einem zweiten Abschnitt 26 und einem dritten Abschnitt 27 zusammensetzen, welche eine Dreiecksform bilden. Die Abschnitte 25 und 27 bilden dabei einen Eckpunkt, im Bereich dessen die Achse 23 gebildet wird. Die Abschnitte 25 und 26 bilden den Eckpunkt, welcher eine Drehachse 31 des Hinterrads 16 definiert. Das Hinterrad 16 dreht beim Fahren um die Drehachse 31. Die Abschnitte 26 und 27 bilden zusammen einen Eckpunkt, welcher eine Rolle 32 trägt. Die Doppelschwinge 20 weist an dem Eckpunkt, in welchem der zweite und dritte Abschnitt 26, 27 zusammenlaufen, ein dort angebrachtes Dämpfungselement 33 auf. Das Dämpfungselement 33 stützt sich über einen Anschlag 34 an dem Sattelstützenlager 6 ab.

In dem Sattelstützenlager 6 ist eine Sattelstütze 35 an ihrem einen Ende aufgenommen. An ihrem anderen Ende trägt die Sattelstütze 35 einen Sattel 36.

Der Abschnitt 4 der oberen Rahmenstrebe 3 ist mit dem Abschnitt 5 der oberen Rahmenstrebe 3 mittels eines Gelenks 37 schwenkbar verbunden. Eine entsprechende Achse 41 des Gelenks 37 verläuft senkrecht zur Fahrbahnebene 42. In der Fahrstellung ist das Gelenk 37 allerdings festgestellt, so dass das Verschwenken um die Achse 41 gesperrt ist. Der erste und zweite Abschnitt 4, 5 sind gleich lang ausgebildet. Hiervon sollen allerdings Längenunterschiede von einigen Zentimetern, beispielsweise weniger 5 cm, umfasst sein.

Der Abschnitt 4 verbindet den Abschnitt 5 mit einem Lenkkopflager 43. In dem Lenkkopflager 43 ist eine Lenkerstrebe 44 um eine Achse 45 drehbar gehalten. Die Achse 45 verläuft beispielsweise unter dem Winkel zwischen 90 und 60° zur Fahrbahnebene 42. Die Lenkerstrebe 44 umfasst einen ersten Abschnitt 46 und einen zweiten Abschnitt 47. Der Abschnitt 46 weist an seinem einen Ende eine Lenkerstange 51 auf und ist an seinem anderen Ende mit dem Abschnitt 47 über ein Gelenk 52 verbunden. Das Gelenk 52 ist oberhalb des Lenkkopflagers 43 angeordnet. Der Abschnitt 47 ist in Form einer Vorderradgabel ausgebildet, welche ein Vorderrad 53 aufnimmt. Die Vorderradgabel 47 ist in der Haupterstreckungsebene 24 gekröpft ausgebildet. An den freien Enden 54 der Vorderradgabel 47 ist jeweils eine Vorderradschwinge 55 angeordnet.

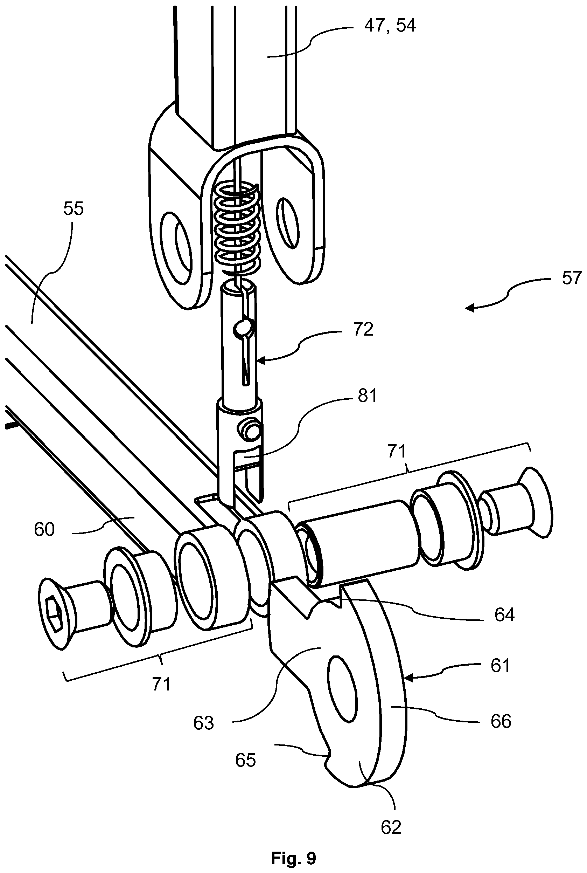

Nachfolgende Erläuterungen beziehen sich der Einfachheit halber lediglich auf eine der Vorderradschwingen 55, gelten aber genauso für die andere Vorderradschwinge 55. Die in Figur 2A gezeigte Vorderradschwinge 55 ist an dem freien Ende 54 der Vorderradgabel 47 um eine Achse 56 schwenkbar angelenkt. Die Achse 56 erstreckt sich senkrecht zur Haupterstreckungsebene 24. Allerdings kann eine in Figur 9 gezeigte Feststelleinrichtung 57 vorgesehen sein, mittels derer verschiedene Schwenkstellungen des Vorderrads 53 bzw. der Vorderradschwinge 55 um die Achse 56 definiert werden.

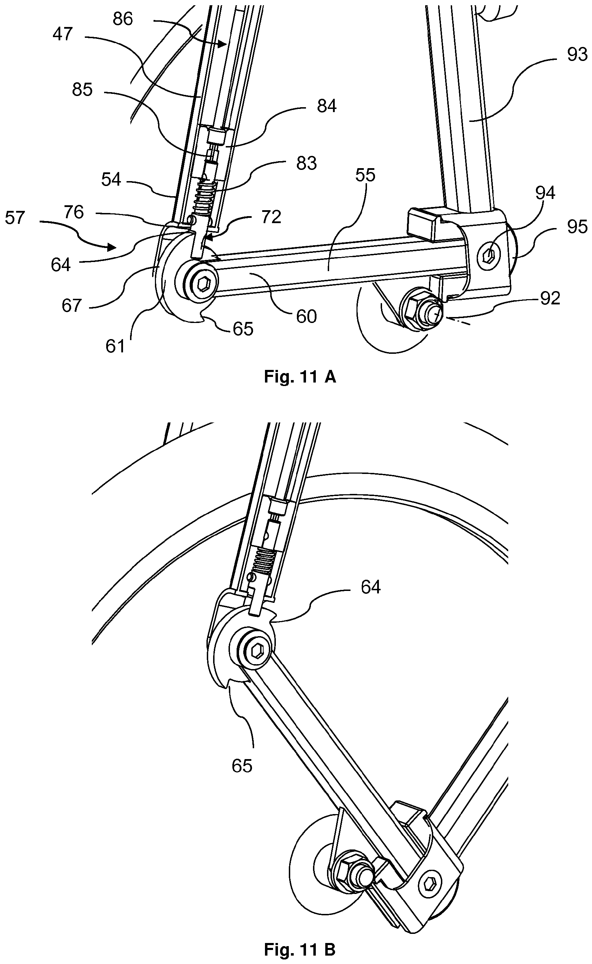

Die Feststelleinrichtung 57 umfasst eine Rastscheibe 61. Die Rastscheibe 61 ist mit einem Ende 60 der Vorderradschwinge 55 fest verbunden, was jedoch in der Explosionsansicht aus Figur 9 nicht zu erkennen ist. Dies ist allerdings in den Figuren 11A bis 11D gezeigt. Die Rastscheibe 61 setzt sich aus einem ersten Kreissegment 62 und einem zweiten Kreissegment 63 zusammen. Das Kreissegment 62 weist einen größeren Radius auf als das Kreissegment 63. Die Kreissegmente 62, 63 sind derart aneinander gesetzt, dass sich zwei Rasten in Form von Stufen 64, 65 ergeben. Beispielsweise können die Kreissegmente 62, 63 hierzu jeweils halbkreisförmig ausgebildet sein. Das Kreissegment 62 kann entlang seines Umfangs 66, beispielsweise mittig (eine entsprechende Stelle ist in Figur 11A mit 67 bezeichnet), einen größeren Umfang als im Bereich der Stufen 64, 65 aufweisen. In Figur 9 sind eine Reihe von Befestigungselementen 71 gezeigt, um die Rastscheibe 61 drehfest mit dem Ende 60 der Vorderradschwinge 60 zu verbinden.

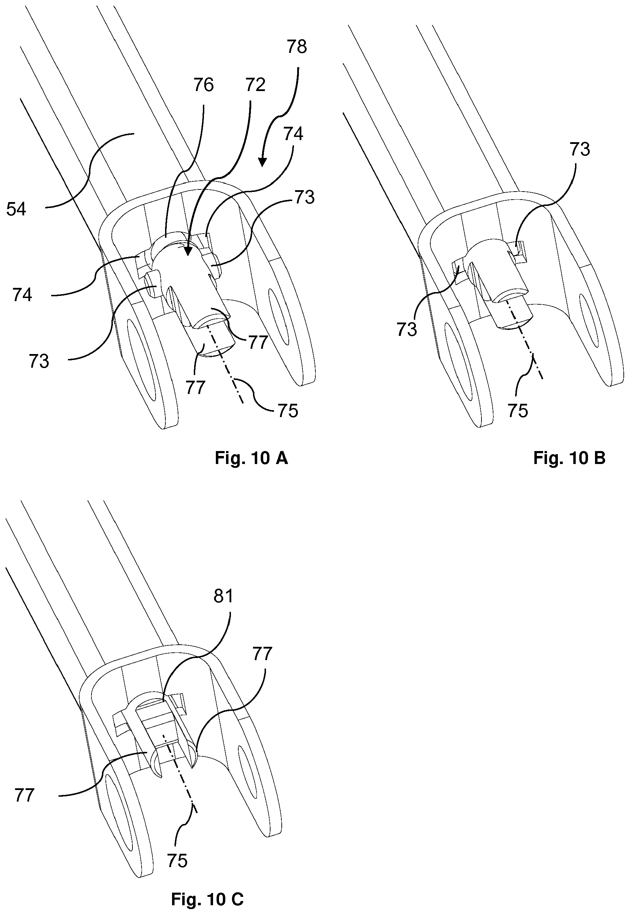

Die Feststelleinrichtung 57 weist weiterhin ein in dieser geführtes Verriegelungselement in Form eines Stifts 72 auf. Wie in den Figuren 10A bis 10C dargestellt, weist der Stift 72 radial nach außen weisende Erhebungen 73 auf. In dem Ende 54 sind Ausnehmungen 74 gebildet, welche mit den Erhebungen 73 korrespondieren. Der Stift 72 wird, wie in den Figuren 10A und 10B gezeigt, zunächst entlang seiner Längsachse 75 in eine kreisförmige Öffnung 76 in dem Ende 54 geschoben. Die Ausnehmungen 74 erweitern die Öffnung 76 radial, so dass auch die Erhebungen 73 durch die Öffnung 76 gelangen (siehe Figur 10B). Anschließend wird der Stift 72 um seine Längsachse 75 gedreht (siehe Figur 10C). Dadurch ist der Stift 72 gegen ein Herausfallen gesichert. Diese Art der Verbindung zwischen dem Stift 72 und dem Ende 54 wird vorliegend als Bajonettverschluss 78 bezeichnet.

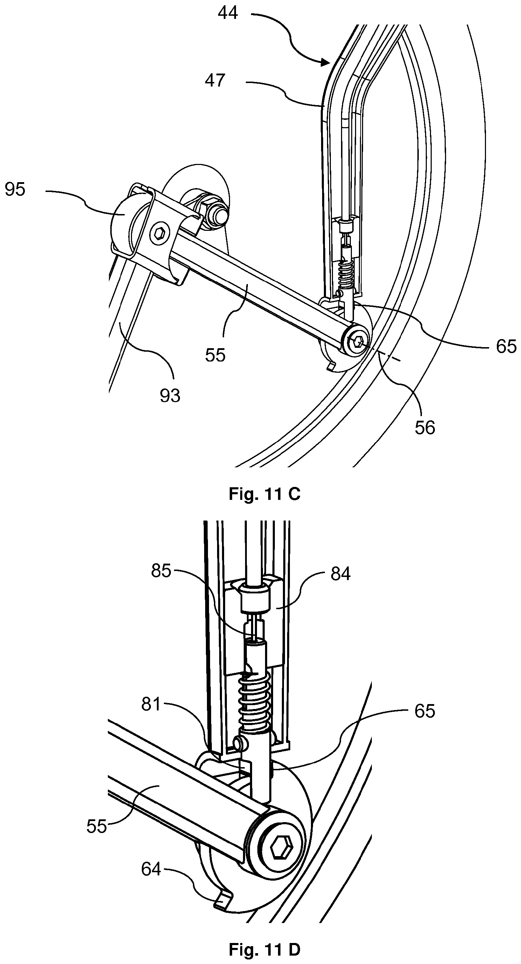

Der Stift 72 weist zwei Zinken 77 auf, wie in Figur 10C gezeigt. Die Zinken 77 nehmen die Rastscheibe 61 zwischen sich auf, wie beispielsweise in Figur 11A dargestellt. Dadurch wird ein Verdrehen des Stifts 72 um die Längsachse 75 verhindert, so dass sich der Stift 72 nicht lösen kann bzw. der Bajonettverschluss 78 nicht aufgehoben werden kann. Zwischen den Zinken 77 weist der Stift 72 einen Anschlag 81 auf, siehe Fig. 10C. In der in Figur 11A gezeigten, ersten Verriegelungsstellung der Feststelleinrichtung 57 verhindert der Anschlag 81 im Zusammenwirken mit der Stufe 64 ein Verschwenken der Vorderradschwinge 55 im Uhrzeigersinn, also nach vorne bzw. in Fahrtrichtung 82, siehe Figur 2A. In der in Figur 11C gezeigten, zweiten Verriegelungsstellung der Feststelleinrichtung 57 wirkt dagegen die Stufe 65 mit dem Anschlag 81 derart zusammen, dass ein Verschwenken der Vorderradschwinge 55 gegen den Uhrzeigersinn, also anfänglich nach vorne bzw. in Fahrtrichtung 82 (anders gesagt: zur Fahrbahnebene 42 hin) und schlussendlich nach hinten bzw. entgegen der Fahrrichtung 82, blockiert ist.

Der Stift 72 wird, wie in Figur 11A gezeigt, mittels einer Druckfeder 83 an einem Gegenlager 84 abgestützt. An dem Stift 72 ist ein Seil 85 eines Seilzugs 86 des Faltrads 1 angebracht. Der Seilzug 86 ist abschnittsweise in der Vorderradgabel 47 geführt. Außerdem ist der Seilzug 86 beispielsweise an der Außenseite des Abschnitts 46 der Lenkerstrebe 44 hin zur Lenkerstange 51 geführt, siehe Figur 2A. An der Lenkerstange 51 ist ein Hebel 87 des Seilzugs 86 angebracht, mittels welchem das Seil 85 durch eine Benutzerperson manuell verkürzt werden kann. Dieses Verkürzen führt dazu, dass der Stift 72 in das Ende 54 der Vorderradgabel gegen die Wirkung der Feder 83 hineingezogen wird und dabei der Anschlag 81 - je nach Stellung der Vorderradschwinge 55 - mit der Stufe 64 oder der Stufe 65 außer Eingriff gelangt. Die Feder 83 bewirkt wiederum, dass bei nicht betätigtem Hebel 87 der Stift 72 bzw. der Anschlag 81 hinter die Stufe 64 bzw. Stufe 65 schnappt, wenn diese überfahren wird.

Nun zurückkehrend zu Figur 2A ist dort gezeigt, dass die Vorderradschwinge 55 an ihrem anderen Ende 91 das Vorderrad 53 um eine Achse 92 drehbar gelagert trägt.

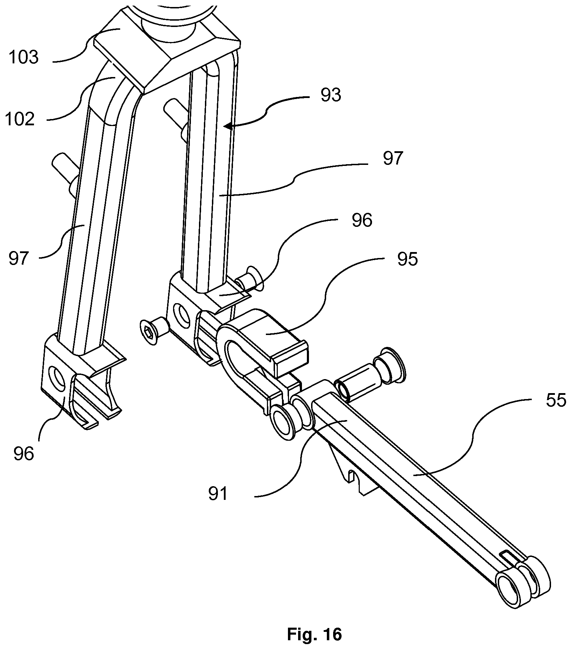

Außerdem ist an dem anderen Ende 91 eine Druckstrebe 93 um eine Achse 94 senkrecht zur Rahmenebene 24 schwenkbar gelagert angebracht. Die Druckstrebe 93 kann U-förmig ausgebildet sein, wie in Figur 16 näher dargestellt. Wie weiter in Figur 16 gezeigt, welche eine Explosionsansicht darstellt, ist ein U-förmiges Ausgleichselement 95 vorgesehen. Das Ausgleichselement 95 kann aus einem Elastomer gebildet sein. Das Ausgleichselement 95 wird auf das Ende 91 der Vorderradschwinge 55 aufgeschoben. Das Ende 91 ist dann zwischen den Schenkeln des Ausgleichselements 95 aufgenommen. Das Ausgleichselement 95 samt dem Ende 91 wird in ein Profil 96 an einem freien Ende eines Schenkels 97 der Druckstrebe 93 eingeschoben und verschraubt.

An der Druckstrebe 93, insbesondere an einem jeweiligen Schenkel 97 derselben, ist eine Bremse 101 angeordnet, wie in Figur 2A dargestellt. Ein jeweiliger Bremsbacken der Bremse 101 kann dabei einem jeweiligen Schenkel 97 zugeordnet sein, wie in Figur 16 angedeutet.

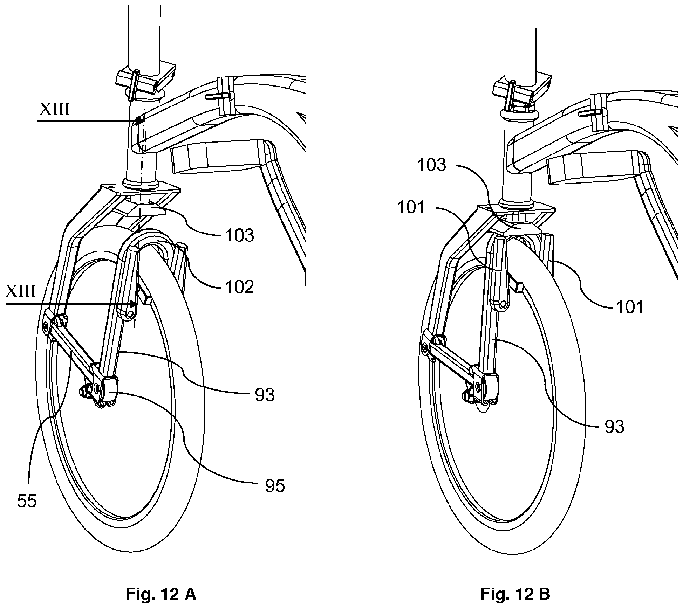

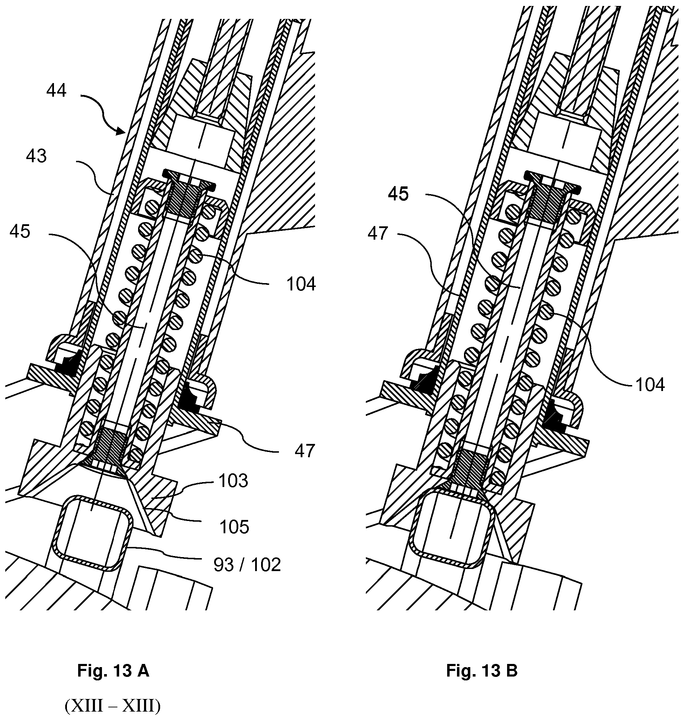

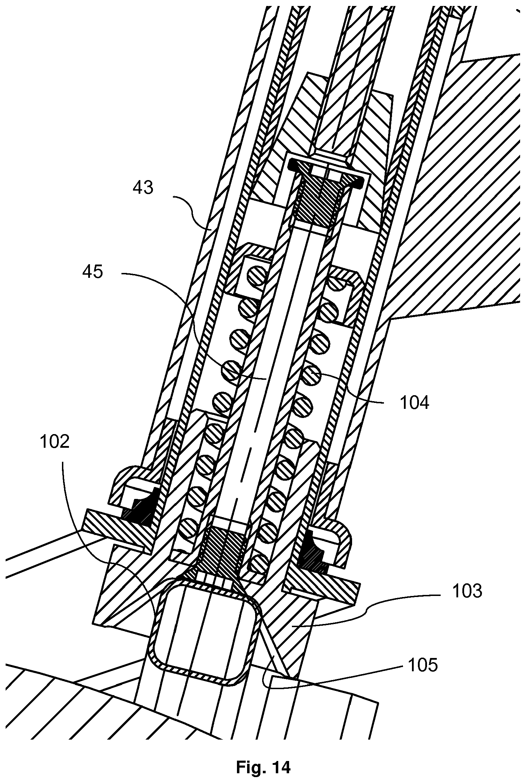

Weiterhin ist in Figur 16 gezeigt, dass die Druckstrebe 97, insbesondere ein mittiger Abschnitt 102 zwischen den Schenkeln 97, gegen ein Kopplungselement 103 anliegt. Das Kopplungselement 103 sowie dessen Zusammenwirken mit der Druckstrebe 93 ist in den Figuren 12A bis 13B illustriert. Das Kopplungselement 103 stützt sich über eine Feder 104 an der Vorderradgabel 47 ab. Das Kopplungselement 103 weist Einführschrägen 105 auf, welche verhindern, dass sich der mittige Abschnitt 102 der Druckstrebe 93 aus seinem in Figur 13B gezeigten Eingriff mit dem Kopplungselement 103 unbeabsichtigt lösen kann. Die Feder 104 erstreckt sich in das Lenkkopflager 43 hinein. Ein in Figur 14 gezeigtes Einfedern findet entlang der Achse 45 statt, wobei der Kopplungsabschnitt 103 in das Lenkkopflager 43 hineinbewegt wird.

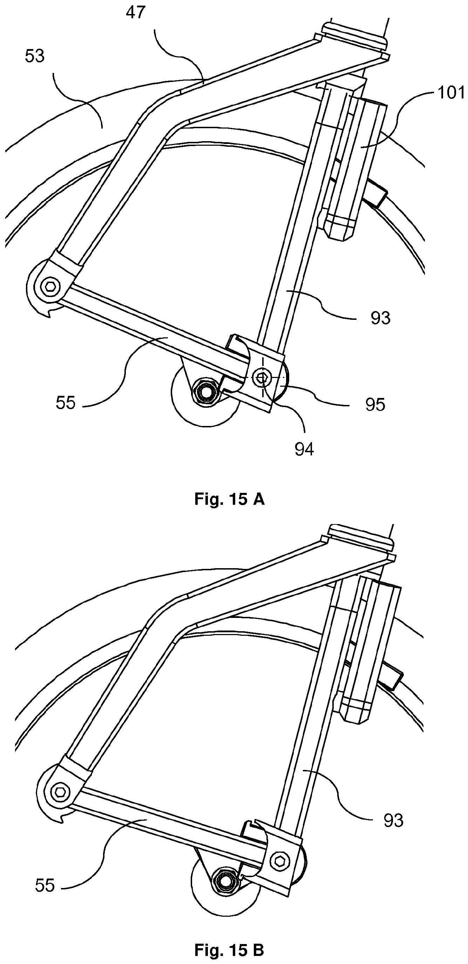

Wie in den Figuren 15A und 15B dargestellt, erlaubt das Ausgleichselement 95 eine Winkelveränderung zwischen der Vorderradschwinge 55 und der Druckstrebe 93 im Zuge des Einfederns des Vorderrads 53, wobei die Feder 104 komprimiert wird. Die Vorderradgabel 47, die Vorderradschwinge 55, die Druckstrebe 93 und die Bremse 101 sind dabei derart angeordnet, dass das Bremsmoment von der Druckstrebe 93 im Wesentlichen senkrecht zur Einfederrichtung (also entlang der Achse 45) in das Kopplungselement 103 eingeleitet wird und somit ein verstärktes Einfedern des Vorderrades 53 während des Bremsvorganges verhindert wird.

Nun wird der Ablauf beim Zusammenfalten des Faltrads 1 aus dessen Fahrstellung in dessen Transportstellung erläutert.

In der in den Figuren 1A bis 2B gezeigten Fahrstellung des Faltrads 1 hebt der Benutzer den Fahrradhinterbau an, wobei die Doppelschwinge 20 samt Hinterrad 16 um die Achse 23 in die Fahrtrichtung 82 verschwenkt. Der Dämpfer 33 gelangt dabei außer Anlage mit dem Anschlag 34. Gemäß einer Ausführungsform kann eine Einrichtung vorgesehen sein, welche gelöst werden muss, damit sich der Dämpfer 33 von dem Anschlag 34 entfernen kann, um ein unbeabsichtigtes Verschwenken der Doppelschwinge 20 zu verhindern.

Dadurch, dass der Schwerpunkt der Doppelschwinge 20 samt dem Hinterrad 16 hinter der Achse 23 liegt, verschwenkt die Doppelschwinge 20 samt dem Hinterrad 16 aufgrund der Wirkung der Schwerkraft um die Achse 23. Indem der Benutzer nun zum richtigen Zeitpunkt den Faltradhinterbau wieder herablässt, schwenkt das Hinterrad 16 samt Doppelschwinge 20 weiter um die Achse 23, so dass die Drehachse 31 des Hinterrads 16 vor der Achse 23 zum Liegen kommt, wie in den Figuren 3A und 3B dargestellt. Außerdem gelangen die Rollen 32 somit in Kontakt mit der Fahrbahn 42.

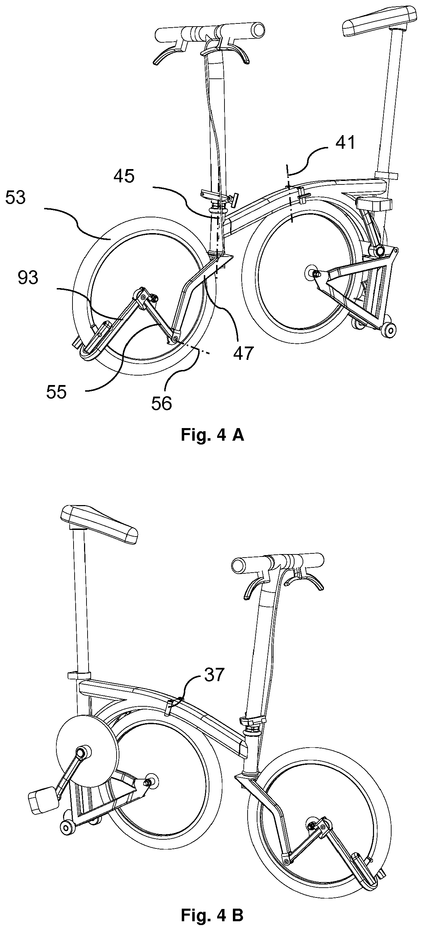

In einem weiteren Schritt wird nun der Hebel 87 von der Benutzerperson betätigt, wodurch die Feststelleinrichtung 57 aus ihrer ersten, in Figur 11A gezeigten Verriegelungsstellung in ihre in Figur 11B gezeigte Freigabestellung gelangt, d. h. der Anschlag 81 des Stifts 72 gelangt außer Eingriff mit der Stufe 64. Gleichzeitig hebt die Benutzerperson den Faltradvorderbau an. Dies führt dazu, dass die Druckstrebe 93 aus ihrem Eingriff mit dem Kopplungselement 103 gelangt, wie in den Figuren 12A und 13A dargestellt. Nun bewegt sich das Vorderrad 53 in der Fahrtrichtung 82 nach vorne, wobei es um die Achse 56 verschwenkt, siehe Fig. 4A. Dabei gleitet der Anschlag 81 des Stifts 72 (siehe Figur 9) über den Umfang 66 der Rastscheibe 61, bis die Stufe 65 überfahren wird. In diesem Moment gelangt die Feststelleinrichtung 57 in ihre zweite Verriegelungsstellung, wie in den Figuren 11C und 11D gezeigt. In der ersten und zweiten Verriegelungsstellung, welche einer ersten und zweiten Schwenkstellung der Vorderradschwinge 55 entspricht, ist diese auf unterschiedlichen Seiten der Vorderradgabel 47 angeordnet, wie ein Vergleich der Figuren 11A und 11C zeigt. Der Winkel zwischen der Druckstrebe 93 und der Vorderradschwinge 55 bleibt dabei unverändert. Die Drehachse 92 des Vorderrads 53 ist nun nicht mehr hinter der Achse 56, wie in Figur 2A gezeigt, sondern vor dieser angeordnet, wie in den Figuren 4A und 4B dargestellt.

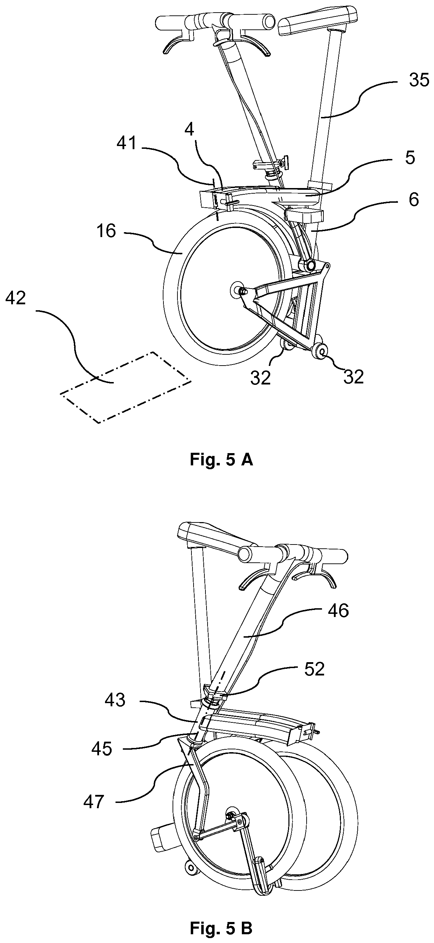

In einem weiteren Schritt wird nun das Gelenk 37 (siehe Fig. 4 A) entriegelt, so dass ein Verschwenken um die Achse 41 stattfinden kann, siehe Fig. 5A. Außerdem wird die Vorderradgabel 47 um die Achse 45 verschwenkt. Das Verschwenken um die Achsen 41 und 45 erfolgt dabei gegensinnig. So wird der erste Abschnitt 4 der oberen Rahmenstrebe 3 auf den zweiten Abschnitt 5 der oberen Rahmenstrebe 3 gefaltet. Außerdem wird das Vorderrad 53 auf das Hinterrad 16 gefaltet. So gelangen das Lenkkopflager 53 und das Sattelstützenlager 6 in unmittelbare Nachbarschaft zueinander. Der kleinste Abstand zwischen diesen kann beispielsweise weniger als 5 cm betragen. Die entsprechende Stellung des Faltrads 1 ist den Figuren 5A und B gezeigt.

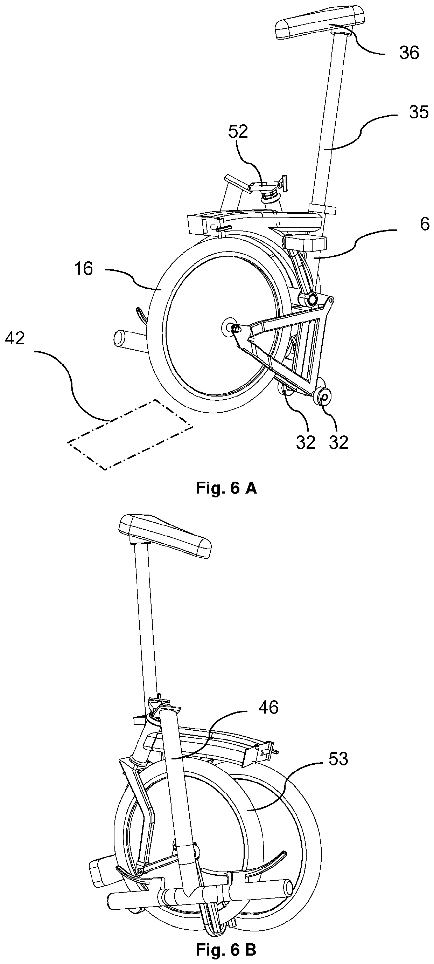

In einem weiteren Schritt wird nun der Abschnitt 46 der Lenkerstrebe 44 auf das Vorderrad 53 gefaltet, siehe Fig. 5A bis 6B. Dazu wird das Gelenk 52 entriegelt. In dieser Stellung des Faltrads 1 kann eine Benutzerperson dieses einfach hinter sich herziehen, indem diese an den Sattel 36 greift. Es besteht eine Dreipunktauflage des Faltrads auf der Fahrbahn 42. Diese Dreipunktauflage wird von den beiden Rollen 32 sowie dem Hinterrad 16 gebildet, wie in den Figuren 6A und 6B gezeigt.

Anschließend wird die Sattelstütze 35 in das Sattelstützenlager 6 eingeschoben. So wird die in den Figuren 7A und 7B gezeigte Transportstellung des Faltrads 1 erreicht. Die Figuren 8A bis 8D zeigen Parallelprojektionen des Faltrads 1 in der Transportstellung. Beispielsweise wird anhand der Figur 8C deutlich, dass durch die gekröpfte Ausbildung der Vorderradgabel 46 eine Kollision derselben mit dem Pedal 17 vermieden wird. Vorzugsweise wird zumindest eines der Pedale 17 eingeklappt, um das Packmaß weiter zu reduzieren.

Somit wird ein insgesamt sehr günstiges Packmaß des Faltrads 1 in der Transportstellung erreicht, welches es erlaubt, dieses in Längsstellung im Kofferraum eines Kleinfahrzeugs oder in einer Ersatzreifenmulde eines solchen unterzubringen.

Beim Verstellen des Faltrads 1 auf dessen Transportstellung in die Fahrstellung sorgen die in Figur 13A gezeigten Einführstreben 105 dafür, dass die Druckstrebe 93 selbsttätig in Eingriff mit dem Kopplungselement 103 gelangt. Ein Verstellen aus der Fahrstellung in die Transportstellung ist jedoch bevorzugt nur möglich, wenn die Benutzerperson den Hebel 87 betätigt, um dadurch die Feststelleinrichtung 57 aus ihrer zweiten Verriegelungsstellung in die Freigabestellung zu bringen. Aus ihrer Freigabestellung gelangt die Feststelleinrichtung 57 in ihre erste Verriegelungsstellung durch bloßes Verschwenken des Vorderrads 53 um die Achse 56, wenn der Stift 72 die erste Stufe 64 überfährt.

Obwohl die Erfindung vorliegend anhand bevorzugter Ausführungsbeispiele beschrieben wurde, ist sie vielfältig modifizierbar. Die mit Bezug auf das erfindungsgemäße Faltrad erläuterten Ausführungsformen und Merkmale gelten entsprechend für das erfindungsgemäße Verfahren.

### BEZUGSZEICHENLISTE

- 1: Faltrad
- 2: Rahmen
- 3: obere Rahmenstrebe
- 4: Abschnitt
- 5: Abschnitt
- 6: Sattelstützenlager
- 7: untere Rahmenstrebe
- 11: Aufnahme
- 12: Welle
- 13: Kurbel
- 14: Kettenblatt
- 15: Kette
- 16: Hinterrad
- 17: Pedal
- 20: Doppelschwinge
- 21: Arm
- 22: Hinterradschwinge
- 23: Achse
- 24: Haupterstreckungsebene
- 25: Abschnitt
- 26: Abschnitt
- 27: Abschnitt
- 31: Drehachse
- 32: Rolle
- 33: Dämpfungselement
- 34: Anschlag
- 35: Sattelstütze
- 36: Sattel
- 37: Gelenk
- 41: Achse
- 42: Fahrbahnebene
- 43: Lenkkopflager
- 44: Lenkerstrebe
- 45: Achse
- 46: Abschnitt
- 47: Abschnitt
- 51: Lenkerstange
- 52: Gelenk
- 53: Vorderrad
- 54: Ende
- 55: Vorderradschwinge
- 56: Achse
- 57: Feststelleinrichtung
- 60: Ende
- 61: Rastscheibe
- 62: Kreissegment
- 63: Kreissegment
- 64: Stufe
- 65: Stufe
- 66: Umfang
- 67: Stelle
- 71: Elemente
- 72: Stift
- 73: Erhebung
- 74: Ausnehmung
- 75: Längsachse
- 76: Öffnung
- 77: Zinken
- 78: Bajonettverschluss
- 81: Anschlag
- 82: Fahrtrichtung
- 83: Feder
- 84: Gegenlager
- 85: Seil
- 86: Seilzug
- 87: Hebel
- 91: Ende
- 92: Drehachse
- 93: Druckstrebe
- 94: Achse
- 95: Ausgleichselement
- 96: Profil
- 97: Schenkel
- 101: Bremse
- 102: Abschnitt
- 103: Kopplungselement
- 104: Feder
- 105: Einführschräge

## Patentansprüche

1. Faltrad (1) mit
einem Rahmen (2), welcher sich in der Haupterstreckungsebene (24) erstreckt,
einem Vorderrad (53), welches um eine erste, sich senkrecht zur Haupterstreckungsebene (24) erstreckende Achse (56) schwenkbar ist, und
einem Hinterrad (16), welches um eine zweite, sich senkrecht zur Haupterstreckungsebene (24) erstreckende Achse (23) schwenkbar ist,
wobei der Rahmen (2) ein Gelenk (37) derart aufweist, dass das Vorder- und Hinterrad (53, 16) um eine dritte, sich senkrecht zur Fahrbahn (42) erstreckende Achse (41) zueinander schwenkbar sind,
**dadurch gekennzeichnet, dass** das Faltrad (1) zwischen einer Fahrstellung und einer Transportstellung dadurch verstellbar ist, dass das Vorderrad (53) um die erste Achse (56) schwenkbar ist und das Hinterrad (16) um die zweite Achse (23) in derselben Richtung schwenkbar ist, wenn das Faltrad (1) in der Fahrstellung angesehen wird.

2. Faltrad nach Anspruch 1, wobei der Rahmen (2) ein Lenkkopflager (43), mittels welchem das Vorderrad (53) für ein Lenken des Faltrads (1) drehbar gelagert ist, und ein Sattelstützenlager (6) aufweist, welches eine Sattelstütze (35) trägt, wobei das Gelenk (37) in Fahrtrichtung (82) mittig zwischen dem Lenkkopflager (43) und dem Sattelstützenlager (6) angeordnet ist, und optionalerweise welches zwischen einer Fahrstellung und einer Transportstellung verstellbar ist, wobei das Lenkkopflager (43) und das Sattelstützenlager (6) in der Transportstellung nebeneinander angeordnet sind.

3. Faltrad nach Anspruch 1 oder 2, wobei das Vorderrad (53) für ein Verstellen des Faltrads (1) zwischen einer Fahrstellung und einer Transportstellung desselben in Fahrtrichtung (82) verschwenkbar ist, und/oder wobei das Hinterrad (16) für ein Verstellen des Faltrads (1) zwischen einer Fahrstellung und einer Transportstellung desselben in Fahrtrichtung (82) verschwenkbar ist.

4. Faltrad nach einem der Ansprüche 1 bis 3,
(a) welches zwischen einer Fahrstellung und einer Transportstellung verstellbar ist, wobei zumindest in der Fahrstellung eine Drehachse (92) des Vorderrads (53) hinter der ersten Achse (56) liegt; und/oder
(b) aufweisend eine Lenkerstrebe (44) und eine Vorderradschwinge (55), welche an ihrem einen Ende (60) an der Lenkerstrebe (44) schwenkbar gelagert ist und an ihrem anderen Ende (91) das Vorderrad (53) drehbar gelagert trägt, wobei für ein Verstellen des Faltrads (1) zwischen einer Fahrstellung und einer Transportstellung desselben die Vorderradschwinge (55) zwischen einer ersten Schwenkstellung, in welcher eine Drehachse (92) des Vorderrads (53) auf einer Seite der Lenkerstrebe (44) in der Haupterstreckungsebene (24) angeordnet ist, und einer zweiten Schwenkstellung verschwenkbar ist, in welcher die Drehachse (92) das Vorderrad (53) auf der anderen Seite der Lenkerstrebe (44) in der Haupterstreckungsebene (24) angeordnet ist.

5. Faltrad nach Anspruch 4(b), aufweisend eine Feststelleinrichtung (57) zum Feststellen der Vorderradschwinge (55) in der ersten und/oder zweiten Schwenkstellung.

6. Faltrad nach Anspruch 5, wobei die Feststelleinrichtung (57) eine Verriegelungsstellung, in welcher ein Verschwenken des Vorderrads (53) zwischen der ersten und zweiten Schwenkstellung gesperrt ist, und eine Freigabestellung aufweist, in welcher das Verschwenken des Vorderrads (53) zwischen der ersten und zweiten Schwenkstellung freigegeben ist, wobei das Faltrad (1) einen Seilzug (86) umfasst, mittels welchem die Feststelleinrichtung (57) zwischen der Verriegelungsstellung und der Freigabestellung verstellbar ist.

7. Faltrad nach Anspruch 6, wobei:
(a) der Seilzug (86) einen an einer Lenkerstange (51) angeordneten Hebel (87) zum Verstellen der Feststelleinrichtung (57) zwischen der Verriegelungsstellung und der Freigabestellung aufweist; und/oder
(b) die Feststelleinrichtung (57) eine an der Vorderradschwinge (55) befestigte Rastscheibe (61) und ein in oder an der Lenkerstrebe (44) linear geführtes, mittels des Seilzuges (86) verstellbares Verriegelungselement (72) aufweist, welches in der Verriegelungsstellung der Feststelleinrichtung (57) mit einer Rast (64, 65) der Rastscheibe (61) in Eingriff und in der Freigabestellung mit der Rast (64, 65) ausser Eingriff steht, optionalerweise wobei das Verriegelungselement (72) mittels eines Bajonettverschlusses (78) in der Lenkerstrebe (44) gegen ein Herausfallen gesichert ist und die Rastscheibe (61) ein Verdrehen des Verriegelungselements (72) zum Lösen des Bajonettverschlusses (78) verhindert.

8. Faltrad nach einem der Ansprüche 1 bis 7, welches zwischen einer Fahrstellung und einer Transportstellung verstellbar ist und eine Lenkerstrebe (44) und eine Vorderradschwinge (55) aufweist, welche an ihrem einen Ende (60) an der Lenkerstrebe (44) schwenkbar angelagert ist und an ihrem anderen Ende (91) das Vorderrad (53) drehbar gelagert trägt, wobei die Lenkerstrebe (44) in der Fahrstellung des Faltrads (1) in der Haupterstreckungsebene (24) gekröpft ausgebildet ist, um in der Transportstellung des Faltrads (1) ein Pedal (17) und/oder eine Tretlageraufnahme (11) des Faltrads (1) auszusparen.

9. Faltrad nach einem der Ansprüche 1 bis 8, aufweisend eine Lenkerstrebe (44), eine Vorderradschwinge (55), welche an ihrem einen Ende (60) an der Lenkerstrebe (44) schwenkbar gelagert ist und an ihrem anderen Ende (91) das Vorderrad (53) drehbar gelagert trägt, und eine Feder (104), mittels derer sich die Vorderradschwinge (55) an der Lenkerstrebe (44) abstützt.

10. Faltrad nach Anspruch 9, aufweisend:
(a) ein Lenkkopflager (43), welches die Lenkerstrebe (44) gegenüber dem Rahmen (2) drehbar gelagert hält, wobei die Feder (104) zumindest teilweise innerhalb der Lenkerstrebe (44) und/oder des Lenkkopflagers (43) angeordnet ist; und/oder
(b) eine Druckstrebe (93), welche sich einerseits an der Vorderradschwinge (55) und andererseits an der Feder (104) abstützt, wobei bevorzugt ein Kupplungselement (103) vorgesehen ist, welches einerseits gegen die Feder (104) wirkt und andererseits eine Einführschräge (105) zur Aufnahme der Druckstrebe (93) aufweist, optionalerweise aufweisend ein Ausgleichselement (95), insbesondere ein Elastomer, welches die Druckstrebe (93) mit der Vorderradschwinge (55) verbindet und ein Verschwenken der Druckstrebe (93) gegenüber der Vorderradschwinge (55) zulässt.

11. Faltrad nach einem der Ansprüche 1 bis 10, aufweisend ein Lenkkopflager (43), mittels welchem das Vorderrad (53) für ein Lenken des Faltrads (1) um eine vierte Achse (45) drehbar gelagert ist, wobei für ein Verstellen des Faltrads (1) zwischen einer Fahrtstellung und Transportstellung desselben das Vorderrad (53) um die dritte und vierte Achse (41, 45) gegensinnig verschwenkbar ist.

12. Verfahren zum Verstellen eines Faltrads (1) nach einem der Ansprüche 1 bis 11 zwischen einer Fahrstellung und einer Transportstellung desselben, wobei
das Vorderrad (53) um die erste Achse (56),
das Hinterrad (16) um die zweite Achse (23) und
das Vorder- oder Hinterrad (53, 16) um die dritte Achse (41) verschwenkt wird.

13. Verfahren nach Anspruch 12 bei Abhängigkeit von Anspruch 11, wobei:
(a) Vorderrad (53) für das Verstellen des Faltrads (1) zwischen der Fahrstellung und der Transportstellung desselben in einem ersten Schritt in Fahrtrichtung (82) um die erste Achse (56) verschwenkt wird und wobei das Vorderrad (53) für das Verstellen des Faltrads (1) zwischen der Fahrstellung und der Transportstellung in einem zweiten Schritt um die dritte und vierte Achse (41, 45) gegensinnig verschwenkt wird; und/oder
(b) das Hinterrad (16) für das Verstellen des Faltrads (1) zwischen der Fahrstellung und der Transportstellung desselben in einem ersten Schritt in Fahrtrichtung (82) um die zweite Achse (23) verschwenkt wird, das Vorderrad (53) für das Verstellen des Faltrads (1) zwischen der Fahrstellung und der Transportstellung desselben in einem zweiten Schritt in Fahrtrichtung (82) um die erste Achse (56) verschwenkt wird und das Vorderrad (53) für das Verstellen des Faltrads (1) zwischen der Fahrstellung und der Transportstellung in einem dritten Schritt um die dritte und vierte Achse (41, 45) gegensinnig verschwenkt wird.

## Claims

1. A folding bicycle (1) having
a frame (2) which extends in the main extension plane (24),
a front wheel (53) which is pivotable about a first axis (56) extending perpendicularly to the main extension plane (24), and
a rear wheel (16) which is pivotable about a second axis (23) extending perpendicularly to the main extension plane (24),
wherein the frame (2) has an articulation (37) such that the front and rear wheels (53, 16) are pivotable with respect to one another about a third axis (41) extending perpendicularly to the roadway (42), **characterized in that** in order to adjust the folding bicycle (1) between a riding position and a transporting position thereof, the front wheel (53) is pivotable about the first axis (56) and the rear wheel (16) is pivotable about the second axis (23) in the same direction when the folding bicycle (1) is viewed in the riding position.

2. The folding bicycle as claimed in claim 1, wherein the frame (2) has a headset bearing (43) by means of which the front wheel (53) is rotatably mounted in order to steer the folding bicycle (1), and a seatpost bearing (6) which supports a seatpost (35), wherein the articulation (37) is arranged centrally in the direction of travel (82) between the headset bearing (43) and the seatpost bearing (6), and optionally which is adjustable between a riding position and a transporting position, wherein the headset bearing (43) and the seatpost bearing (6) are arranged alongside one another in the transporting position.

3. The folding bicycle as claimed in claim 1 or 2, wherein, in order to adjust the folding bicycle (1), the front wheel (53) is pivotable in the direction of travel (82) between a riding position and a transporting position of said folding bicycle (1) and/or the rear wheel (16) is pivotable in the direction of travel (82) between a riding position and a transporting position of said folding bicycle (1).

4. The folding bicycle as claimed in one of claims 1 to 3:
(a) which is adjustable between a riding position and a transporting position, wherein, at least in the riding position, a rotation axis (92) of the front wheel (53) is located behind the first axis (56); and/or
(b) having a head tube (44) and a front wheel swing arm (55) which at its one end (60) is mounted pivotably on the head tube (44) and at its other end (91) supports the front wheel (53) in a rotatably mounted manner, wherein, in order to adjust the folding bicycle (1) between a riding position and a transporting position thereof, the front wheel swing arm (55) is pivotable between a first pivoted position, in which a rotation axis (92) of the front wheel (53) is arranged on one side of the head tube (44) in the main extension plane (24), and a second pivoted position, in which the rotation axis (92) of the front wheel (53) is arranged on the other side of the head tube (44) in the main extension plane (24).

5. The folding bicycle as claimed in claim 4 part (b), having a fixing device (57) for fixing the front wheel swing arm (55) in the first and/or second pivoted position.

6. The folding bicycle as claimed in claim 5, wherein the fixing device (57) has a locking position, in which the front wheel (53) is prevented from pivoting between the first and second pivoted positions, and a releasing position in which the front wheel (53) is allowed to pivot between the first and second pivoted positions, wherein the folding bicycle (1) comprises a cable pull (86) by means of which the fixing device (57) is adjustable between the locking position and the releasing position.

7. The folding bicycle as claimed in claim 6, wherein:
(a) the cable pull (86) has a lever (87), arranged on a handlebar (51), for adjusting the fixing device (57) between the locking position and the releasing position; and/or
(b) the fixing device (57) has a detent disk (61) fastened to the front wheel swing arm (55), and a locking element (72) that is guided in a linear manner in or on the head tube (44) and is adjustable by means of the cable pull (86), said locking element (72) being in engagement with a detent (64, 65) of the detent disk (61) in the locking position of the fixing device (57) and being disengaged from the detent (64, 65) in the releasing position, optionally wherein the locking element (72) is secured against falling out by means of a bayonet closure (78) in the head tube (44) and the detent disk (61) prevents the locking element (72) from rotating in order to release the bayonet closure (78).

8. The folding bicycle as claimed in one of claims 1 to 7, which is adjustable between a riding position and a transporting position and has a head tube (44) and a front wheel swing arm (55) which at its one end (60) is mounted pivotably on the head tube (44) and at its other end (91) supports the front wheel (53) in a rotatably mounted manner, wherein the head tube (44) is formed in an elbowed manner in the main extension plane (24) in the riding position of the folding bicycle (1) in order to leave room for a pedal (17) and/or a bottom bracket cradle (11) of the folding bicycle (1) in the transporting position of the folding bicycle (1).

9. The folding bicycle as claimed in one of claims 1 to 8, having a head tube (44), a front wheel swing arm (55) which, at its one end (60), is mounted pivotably on the head tube (44) and at its other end (91) supports the front wheel (53) in a rotatably mounted manner, and a spring (104) by means of which the front wheel swing arm (55) is supported on the head tube (44).

10. The folding bicycle as claimed in claim 9, having:
(a) a headset bearing (43) which holds the head tube (44) in a rotatably mounted manner with respect to the frame (2), wherein the spring (104) is arranged at least partially within the head tube (44) and/or the headset bearing (43); and/or
(b) a strut (93) which is supported on one side on the front wheel swing arm (55) and on the other side on the spring (104), wherein provision is preferably made of a coupling element (103) which on one side acts against the spring (104) and on the other side has an insertion bevel (105) for receiving the strut (93), optionally having a compensating element (95), in particular an elastomer, which connects the strut (93) to the front wheel swing arm (55) and allows the strut (93) to pivot with respect to the front wheel swing arm (55).

11. The folding bicycle as claimed in one of claims 1 to 10, having a headset bearing (43) by means of which the front wheel (53) is mounted in a rotatable manner about a fourth axis (45) in order to steer the folding bicycle (1), wherein, in order to adjust the folding bicycle (1) between a riding position and a transporting position thereof, the front wheel (53) is pivotable in opposite directions about the third and fourth axes (41, 45).

12. A method for adjusting a folding bicycle (1) as claimed in one of claims 1 to 11 between a riding position and a transporting position thereof, wherein
the front wheel (53) is pivoted about the first axis (56),
the rear wheel (16) is pivoted about the second axis (23), and
the front wheel or rear wheel (53, 16) is pivoted about the third axis (41).

13. The method as claimed in claim 12 when dependent on claim 11, wherein:
(a) in order to adjust the folding bicycle (1) between the riding position and the transporting position thereof, the front wheel (53) is pivoted in a first step about the first axis (56) in the direction of travel (82), and wherein, in order to adjust the folding bicycle (1) between the riding position and the transporting position, the front wheel (53) is pivoted in a second step in opposite directions about the third and fourth axes (41, 45); and/or
(b) in order to adjust the folding bicycle (1) between the riding position and the transporting position thereof, the rear wheel (16) is pivoted in a first step about the second axis (23) in the direction of travel (82), in order to adjust the folding bicycle (1) between the riding position and the transporting position thereof, the front wheel (53) is pivoted in a second step about the first axis (56) in the direction of travel (82), and, in order to adjust the folding bicycle (1) between the riding position and the transporting position, the front wheel (53) is pivoted in a third step in opposite directions about the third and fourth axes (41, 45).

## Revendications

1. Vélo pliant (1) comprenant
un cadre (2) qui s'étend dans le plan d'extension principal (24),
une roue avant (53) qui peut pivoter sur un premier axe (56) perpendiculairement au plan d'extension principal (24), et
une roue arrière (16) qui peut pivoter sur un deuxième axe (23) s'étendant perpendiculairement au plan d'extension principal (24),
le cadre (2) comportant une articulation (37) de telle sorte que les roues avant et arrière (53, 16) peuvent pivoter l'une par rapport à l'autre sur un troisième axe (41) s'étendant perpendiculairement à la chaussée (42), **caractérisé en ce que** le vélo pliant (1) est réglable entre une position de roulement et une position de transport de telle sorte que la roue avant (53) peut pivoter sur le premier axe (56) et la roue arrière (16) peut pivoter dans le même sens sur le second axe (23) lorsque le vélo pliant (1) est placé dans la position de roulement.

2. Vélo pliant selon la revendication 1, dans lequel le cadre (2) comporte un palier de tête de direction (43), au moyen duquel la roue avant (53) est monté à rotation pour diriger le vélo pliant (1) et un palier de support de selle (6) qui porte un support de selle (35), l'articulation (37) étant disposé au milieu entre le palier de tête de direction (43) et le palier de support de selle (6) par référence à la direction de roulement (82), et qui peut être réglé éventuellement entre une position de roulement et une position de transport, le palier de tête de direction (43) et le palier de support de selle (6) étant disposés côte à côte dans la position de transport.

3. Vélo pliant selon la revendication 1 ou 2, dans lequel la roue avant (53) peut pivoter pour réglage le vélo pliant (1) entre une position de roulement et une position de transport de celui-ci dans la direction de roulement (82), et/ou la roue arrière (16) peut pivoter pour régler le vélo pliant (1) entre une position de roulement et une position de transport de celui-ci dans la direction de roulement (82).

4. Vélo pliant selon l'une des revendications 1 à 3,
(a) lequel est réglable entre une position de roulement et une position de transport, un axe de rotation (92) de la roue avant (53) se trouvant en arrière du premier axe (56) au moins dans la position de roulement ; et/ou
(b) lequel comprend un bras de suspension (44) et un bras oscillant de roue avant (55) qui est monté de manière pivotante à une extrémité (60) sur le bras de suspension (44) et qui supporte à rotation la roue avant (53) à son autre extrémité (91), pour régler le vélo pliant (1) entre une position de roulement et une position de transport de celui-ci le bras oscillant de roue avant (55) pouvant pivoter entre une première position de pivotement, dans laquelle un axe de rotation (92) de la roue avant (53) est disposé sur un côté du bras de suspension (44) dans le plan d'extension principal (24), et une seconde position de pivotement dans laquelle l'axe de rotation (92) de la roue avant (53) est disposé de l'autre côté du bras de suspension (44) dans le plan d'extension principale (24).

5. Vélo pliant selon la revendication 4(b), comprenant un dispositif de fixation (57) destiné à fixer le bas oscillant de roue avant (55) dans la première et/ou seconde position de pivotement.

6. Vélo pliant selon la revendication 5, dans lequel le dispositif de fixation (57) comporte une position de verrouillage, dans laquelle un pivotement de la roue avant (53) entre la première et la seconde position de pivotement est bloqué, et une position de libération dans laquelle le pivotement de la roue avant (53) entre la première et la seconde position de pivotement est activé, la vélo pliant (1) comprenant un câble (86) au moyen duquel le dispositif de fixation (57) est réglable entre la position de verrouillage et la position de libération.

7. Vélo pliant selon la revendication 6, dans lequel :
(a) le câble (86) comporte un levier (87), disposé sur un guidon (51), pour régler le dispositif de fixation (57) entre la position de verrouillage et la position de libération ; et/ou
(b) le dispositif de fixation (57) comporte un disque d'arrêt (61), fixé au bras oscillant de roue avant (55), et un élément de verrouillage (72) guidé linéairement dans ou sur le bras de suspension (44), réglable au moyen du câble (86), s'engageant avec un cran d'arrêt (64, 65) du disque d'arrêt (61) lorsque le dispositif de verrouillage (57) est dans la position de verrouillage et étant désengagé du cran d'arrêt (64, 65) dans la position de libération, éventuellement l'élément de verrouillage (72) étant empêcher à l'aide d'une moyen fermeture à baïonnette (78) dans le bras de suspension (44) et le disque d'arrêt (61) empêchant la rotation de l'élément de verrouillage (72) pour libérer le moyen de fermeture à baïonnette (78).

8. Vélo pliant selon l'une des revendications 1 à 7, lequel est réglable entre une position de roulement et une position de transport et comporte un bras de suspension (44) et un bras oscillant de roue avant (55) qui est monté de manière pivotante à une extrémité (60) sur le bras de suspension (44) et qui supporte à rotation la roue avant (53) à son autre extrémité (91), le bras de suspension (44) ayant une forme coudée dans le plan d'extension principal (24), lorsque le vélo pliant (1) est dans la position de roulement, pour ménager un espace pour une pédale (17) et/ou un logement de pédalier (11) du vélo pliant (1) lorsque le vélo pliant (1) est dans la position de transport.

9. Vélo pliant selon l'une des revendications 1 à 8, comprenant un bras de suspension (44), un bras oscillant de roue avant (55) monté de manière pivotante à une extrémité (60) sur le bras de suspension (44) et supportant à rotation la roue avant (53) à son autre extrémité (91), et un ressort (104) au moyen duquel le bras oscillant de roue avant (55) s'appuie sur le bras de suspension (44).

10. Vélo pliant selon la revendication 9, comprenant :
(a) un palier de tête de direction (43) qui maintient le bras de suspension (44) de manière rotative par rapport au cadre (2), le ressort (104) étant disposé au moins partiellement à l'intérieur du bras de suspension (44) et/ou du palier de tête de direction (43) ; et/ou
(b) une jambe de force (93) qui s'appuie d'une part sur le bras oscillant de roue avant (55) et d'autre part sur le ressort (104), un élément d'accouplement (103) étant de préférence prévu qui agit d'une part contre le ressort (104) et qui comporte d'autre part un biseau d'insertion (105) destiné à recevoir la jambe de force (93), et comprenant éventuellement un élément de compensation (95), en particulier un élastomère, qui relie la jambe de force (93) au bras oscillant de roue avant (55) et qui permet à la jambe de force (93) de pivoter par rapport au bras oscillant de roue avant (55).

11. Vélo pliant selon l'une des revendications 1 à 10, comprenant un palier de tête de direction (43) au moyen duquel la roue avant (53) est monté de manière rotative sur un quatrième axe (45) pour diriger le vélo pliant (1), pour un régler le vélo pliant (1) entre une position de roulement et une position de transport de celui-ci la roue avant (53) peut pivoter dans des sens opposés sur les troisième et quatrième axes (41, 45).

12. Procédé de réglage d'un vélo pliant (1) selon l'une des revendications 1 à 11 entre une position de roulement et une position de transport,
la roue avant (53) pouvant pivoter sur le premier axe (56),
la roue arrière (16) pouvant pivoter sur le deuxième axe (23) et
la roue avant ou arrière (53, 16) pouvant pivoter sur le troisième axe (41).

13. Procédé selon la revendication 12 en fonction de la revendication 11, dans lequel :
(a) la roue avant (53) est pivoté, dans une première étape, sur le premier axe (56) dans la direction de roulement (82) pour régler le vélo pliant (1) entre la position de roulement et la position de transport de celui-ci, et la roue avant (53) est pivoté, dans une seconde étape, sur les troisième et quatrième axes (41, 45) dans des sens opposés pour régler le vélo pliant (1) entre la position roulement et la position de transport ; et/ou
(b) la roue arrière (16) est pivotée, dans une première étape, sur le deuxième axe (23) dans la direction de roulement (82) pour régler le vélo pliant (1) entre la position de roulement et la position de transport de celui-ci, la roue avant (53) est pivotée, dans une seconde étape, sur le premier axe (56) dans la direction de roulement (82) pour régler le vélo pliant (1) entre la position de roulement et la position de transport de celui-ci et la roue avant (53) est pivotée, dans une troisième étape, sur les troisième et quatrième axes (41, 45) dans des sens opposés pour régler le vélo pliant (1) entre la position de roulement et la position de transport.
